(19) Europäisches Patentamt / European Patent Office / Office européen des brevets

(11) **EP 3 922 602 B1**

(12) **EUROPEAN PATENT SPECIFICATION**

(45) Date of publication and mention
of the grant of the patent:
**02.08.2023 Bulletin 2023/31**

(21) Application number: **20756029.3**

(22) Date of filing: **23.01.2020**

(51) International Patent Classification (IPC):
**C01B 33/16** $^{(2006.01)}$        **C08G 77/04** $^{(2006.01)}$
**C08G 77/00** $^{(2006.01)}$

(52) Cooperative Patent Classification (CPC):
**C08G 77/04; C01B 33/16; C08G 77/80;**
C01P 2004/20; C01P 2006/12

(86) International application number:
**PCT/JP2020/002367**

(87) International publication number:
**WO 2020/166302 (20.08.2020 Gazette 2020/34)**

(54) **AEROGEL AND PRODUCTION METHOD THEREFOR**

**AEROGEL UND HERSTELLUNGSVERFAHREN DAFÜR**

**AÉROGEL ET SON PROCÉDÉ DE PRODUCTION**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.02.2019   JP 2019024297**

(43) Date of publication of application:
**15.12.2021 Bulletin 2021/50**

(73) Proprietor: **Tiem Factory Inc.**
**Tokyo 105-0001 (JP)**

(72) Inventors:
• **AIZAWA, Mamoru**
**Tokyo 105-0001 (JP)**

• **UEGAKI, Ai**
**Tokyo 105-0001 (JP)**

(74) Representative: **Maiwald GmbH**
**Elisenhof**
**Elisenstraße 3**
**80335 München (DE)**

(56) References cited:
EP-A1- 3 042 884        EP-A1- 3 257 812
WO-A1-2005/110919        CN-A- 103 706 342
CN-A- 106 854 086        CN-A- 107 188 188
DE-A1-102015 200 191        JP-A- 2011 136 859
JP-A- 2011 136 859        US-B1- 8 067 478

**EP 3 922 602 B1**

**Description**

TECHNICAL FIELD

The present invention relates to an aerogel having excellent thermal insulating characteristics and a plate-like or film-like shape having a large area (e.g., 400 cm$^2$ or more) and a method for producing the same.

BACKGROUND ART

Conventionally, a dried gel body called an aerogel having a siloxane bond has been known. Specifically, an aerogel (dried gel body) having a large number of pores is obtained by hydrolyzing a monomer solution (solvent: water and/or an organic solvent) of a silane compound to form a sol, subjecting the sol to crosslinking to form a gel (condensation compound), and then drying the gel.

Herein, pore diameters of pores of an aerogel are not greater than a mean free path (Mean Free Path [MFP]) at an atmospheric pressure of molecules of elements that constitute, for example, the air. Therefore, in the interior of an aerogel, heat exchange between molecules of elements constituting the air is hardly performed, and thus the aerogel has an excellent potential as a thermal insulating material. Its thermal insulating characteristics are said to be next to a vacuum.

However, in the initial stage of gel drying, the gel shrinks due to capillary forces, and this shrinkage force causes various defects such as self-destruction of the entire gel, internal damage, shattering, and even if the outer form of the aerogel is preserved, defects such as unintentional voids other than pores and a distorted appearance may occur. Therefore, due to these reasons, aerogels have not yet attained a level of mass production.

As a method for reducing the capillary forces in the initial stage of gel drying, a supercritical drying method has been attempted, in which a liquid inside the gel is exchanged with carbon dioxide in a supercritical state of carbon dioxide, and the carbon dioxide is subsequently dried by returning the pressure of the carbon dioxide to an atmospheric pressure. However, the supercritical drying method has a problem in that, in addition to an increase in the size of the necessary facilities, the production costs are remarkably high, and mass production is difficult.

On the other hand, as a known manufacturing method without using a supercritical state, a drying method in which a gel is dried under a temperature and a pressure below a critical point of a solvent, particularly a drying method using a solvent having a low surface tension, can be mentioned

(for example, Patent Document 1 proposed by the present inventors). Patent Document 2, provides a fiber heat insulating material which is manufactured by a simple manufacturing process and in which a silica xerogel having a smaller pore than the air mean free path and a low bulk density is carried on a fiber mat, also providing a method for manufacturing the same.

Patent Document 1: Japanese Patent No. 5250900
Patent Document 2: Japanese Patent Application No. 2011-136859

DISCLOSURE OF THE INVENTION

Problems to be Solved by the Invention

Generally, an aerogel tends to have a higher thermal conductivity as the density increases, and the aerogel described in Patent Document 1 has a relatively high density of 0.20 g/cm$^3$ or more when drying is performed at an atmospheric pressure, so that thermal insulating characteristics were not yet sufficient and there was room for improvement. Since thermal insulating characteristics strongly depend on the density and porosity of the aerogel, it is desirable to reduce the density of the aerogel, in which pores exist, to as low as possible.

In addition, in the method for producing an aerogel described in Patent Document 1, only one type of silicon compound (in the Examples, only methyltrimethoxysilane (MTMS) that is a tri-functional type) was used as a silicon raw material, so that the aerogel often had defects such as cracks, voids, distortion, etc. Moreover, only an aerogel having a size (area) of about several centimeters square at most could be produced. Thus, the aerogels could be used only in limited applications.

For this reason, it was necessary to develop a technique to stably produce a sheet-like aerogel that has a large area and excellent thermal insulating characteristics.

It is an object of the present invention to provide an aerogel in a plate-like or film-like shape that has excellent thermal insulating characteristics and a large area (e.g., 400 cm$^2$ or more), and a method for producing the same. In particular, the present invention aims at further improving thermal insulating characteristics and increasing an area, compared to the aerogel described in Patent Document 1.

Means for Solving the Problems

Under the conditions that drying in a supercritical state is not required and drying in a non-supercritical condition is adopted, the present inventors have intensively studied improvement in thermal insulating characteristics and an increase in an area of the aerogel, and have found that: by mixing at least a tetra-functional silane compound, preferably both a tetra-functional silane compound and a di-functional silane compound, in addition to a tri-functional silane compound, at predetermined ratios (mass percentages), as a silicon compound as a main raw material for producing the aerogel, it is possible to produce an aerogel having a low density ($0.15 \text{ g/cm}^3$ or less) and fewer defects such as cracks, thereby resulting in improvement in thermal insulating characteristics; and additionally, an aerogel with a large area of $400 \text{ cm}^2$ or more can be produced, which could not be produced in Patent Document 1.

With respect to the bonding state of siloxane bond constituting the skeleton of the aerogel produced by the method of the present invention, the inventors also have found that mass percentages Q, T, and D, which are derived from a component Q, a component T, and a component D, respectively and which are calculated from signal area integral values obtained by NMR measurement, correlate with mixing ratios (mass percentages) of silicon compounds serving as main raw materials for producing the aerogel described above, thereby completing the present invention.

That is, the features of the present invention are as indicated below. A first aspect of the present invention relates to a method for producing an aerogel, the method including a sol formation step of forming a sol by adding a silicon compound to an aqueous solution containing an acid catalyst and hydrolyzing the silicon compound, in which the silicon compound contains at least a tetra-functional silane compound and a tri-functional silane compound, among a tetra-functional silane compound, a tri-functional silane compound, and a di-functional silane compound, the aerogel has a density of $0.15 \text{ g/cm}^3$ or less, and the aerogel is formed as a single plate or a single film. A second aspect of the present invention relates to the method for producing an aerogel as described in the first aspect, in which when mass percentages of the tetra-functional silane compound, the tri-functional silane compound, and the di-functional silane compound are represented by Qx, Tx, and Dx, respectively, the silicon compound is mixed so that Qx, Tx, and Dx satisfy $0 < Qx < 50$, $50 \leq Tx < 100$, $0 \leq Dx < 30$ and $Qx + Tx + Dx = 100$. A third aspect of the present invention relates to the method for producing an aerogel as described in the second aspect, in which when the respective mass percentages Qx, Tx, and Dx of the tetra-functional silane compound, the tri-functional silane compound, and the di-functional silane compound, respectively, are plotted in a triangular diagram (Qx, Tx, and Dx) having Qx, Tx, and Dx as coordinate axes, Qx, Tx, and Dx are present within a range surrounded by six straight lines each connecting point A (5, 95, 0), point B (40, 60, 0), point C (40, 55, 5), point D (30, 55, 15), point E (15, 70, 15), point F (5, 90, 5), and point A (5, 95, 0) in this order. A fourth aspect of the present invention relates to an aerogel, in which when mass percentages derived from a tetra-functional silane Q component, a tri-functional silane T component, and a di-functional silane D component are represented by Q, T, and D, respectively, with the mass percentages being calculated from signal area integral values measured by solid-state $^{29}\text{Si-NMR}$, Q, T, and D satisfy $0 < Q < 50$, $50 \leq T < 100$, $0 \leq D < 30$, respectively, and $Q + T + D = 100$, and in which the aerogel has a density of $0.15 \text{ g/cm}^3$ or less, and the aerogel is formed as a single plate or a single film. A fifth aspect of the present invention relates to the aerogel as described in the fourth aspect, in which when the respective mass percentages Q, T, and D calculated from signal area integral values derived from the Q component, the T component, and the D component are plotted in a triangular diagram (Q, T, D) having Q, T, and D as coordinate axes, Q, T, and D are present within a range surrounded by six straight lines each connecting point A' (5, 95, 0), point B' (40, 60, 0), point C' (40, 55, 5), point D' (30, 55, 15), point E' (15, 70, 15), point F' (5, 90, 5), and point A' (5, 95, 0) in this order. A sixth aspect of the present invention relates to the aerogel as described in the fourth or fifth aspect, in which a minimum value of transmittance in a wavelength range of 400 to 800 nm is 40% or more. A seventh aspect of the present invention relates to the aerogel as described in any one of the fourth to sixth aspects, in which the aerogel has an area of $400 \text{ cm}^2$ or more.

Effects of the Invention

According to the present invention, it is possible to provide an aerogel having excellent thermal insulating characteristics and forming a plate-like or film-like shape having a large area (e.g. $400 \text{ cm}^2$ or more) and a method for producing the same.

BRIEF DESCRIPTION OF THE DRAWINGS

FIG. 1 is a triangular diagram showing an appropriate range (region I) and a preferred range (region II) of Qx, Tx, and Dx which are mass percentages of the tetra-functional silane compound, the tri-functional silane compound, and the di-functional silane compound to be mixed in a step of forming a sol of the production method of the present invention;

FIG. 2 is a diagram showing NMR data of the aerogel of the present invention (sample number 1-27); and

FIG. 3 is a diagram showing transmittance spectral data of the aerogel of the present invention (Sample No. 1-27).

PREFERRED MODE FOR CARRYING OUT THE INVENTION

Below, embodiments of the present invention will now be described.

The method for producing an aerogel of the present embodiment includes: a sol formation step of forming a sol by adding a silicon compound to an aqueous solution containing an acid catalyst and hydrolyzing the silicon compound, in which the silicon compound contains at least a tetra-functional silane compound and a tri-functional silane compound, among a tetra-functional silane compound, a tri-functional silane compound, and a di-functional silane compound. Further, the aerogel obtained by this production method has a density of 0.15 g/cm$^3$ or less. The aerogel thus produced is formed as a single plate or a single film.

In particular, the method for producing an aerogel of the present embodiment does not include drying an aerogel in a supercritical state, but optimizing silicon compounds to be mixed in the sol formation step for producing a raw material sol. Other steps are not particularly limited. As a specific production method of the present embodiment, performing, for example, a sol formation step, a wet gel-forming and molding step, a solvent exchanging step, and a drying step in this order can be mentioned. Note that the method for producing an aerogel of the present embodiment can adopt, for example, a configuration (steps) of a one-stage solidification method or a two-stage solidification method. Herein, the one-stage solidification method means a method in which sol formation by hydrolysis reaction of a silicon compound and gelation by polycondensation reaction of the formed sol are continuously performed with the same solution composition. The two-stage solidification method means a method in which a silicon compound is hydrolyzed to form a sol, and then a basic aqueous solution is added to convert the sol into a different solution composition, and then gelation by polycondensation reaction of the sol is performed.

In the following first embodiment, with respect to a case in which the configuration (steps) of the one-stage solidification method is employed, each step will be described in detail.

(I)First embodiment (method for producing an aerogel using one-stage solidification method)

(I-1) Sol formation step

A sol formation step includes a step of adding various raw materials containing a silicon compound (main raw material) into a predetermined solution and stirring and mixing them, thereby forming a sol.

(I-1-1) Siloxane bond-constituting material (main raw materials)

It is necessary for the production method of the first embodiment to include forming a sol by mixing at least a tetra-functional silane compound at a predetermined ratio (mass percentage) in addition to a tri-functional silane compound, as a silicon compound serving as a main raw material for producing the aerogel. More preferably, when the mass percentages of the tetra-functional silane compound, the tri-functional silane compound, and the di-functional silane compound are represented by Qx, Tx, and Dx, respectively, the production method of the first embodiment includes a step of mixing their silicon compounds in a proportion in which Qx, Tx, and Dx satisfy $0 < Qx < 50$, $50 \leq Tx < 100$, $0 \leq Dx < 30$, and $Qx + Tx + Dx = 100$. By mixing each of Qx, Tx, and Dx in the mass percentages of the range described above, an aerogel having fewer defects such as cracks and a lower density as compared with the aerogel described in Patent Document 1 can be produced. As a result, it is possible to produce an aerogel that has improved thermal insulating characteristics and that forms a plate-like or film-like shape having a large area of 400 cm$^2$ or more (for example, 20 cm square). Such an aerogel could not be produced in Patent Document 1.

Herein, the tetra-functional silane compound refers to a silane compound in which the number of siloxane bonds (the number of oxygen atoms bonded to one silicon atom) is four, and the tri-functional silane compound refers to a silane compound in which the number of siloxane bonds is three, and the di-functional silane compound refers to a silane compound in which the number of siloxane bonds is two.

Examples of the tetra-functional silane compound include tetraalkoxysilane and tetraacetoxysilane. Preferred embodiments of the tetraalkoxysilane include those in which an alkoxy group has 1 to 9 carbon atoms. Examples thereof include tetramethoxysilane, tetraethoxysilane, tetrapropoxysilane, and tetraisopropoxysilane. These silane compounds may be used alone or in combination of two or more thereof. In the present invention, particularly, tetramethoxysilane (TMOS) is preferably used as the tetra-functional silane compound.

Examples of the tri-functional silane compound include trialkoxysilane and triacetoxysilane. Preferred embodiments of the trialkoxysilane include those in which an alkoxy group has 1 to 9 carbon atoms. Examples thereof include methyltrimethoxysilane, ethyltrimethoxysilane, propyltrimethoxysilane, hexyltrimethoxysilane, octyltrimethoxysilane, methyltriethoxysilane, ethyltriethoxysilane, propyltriethoxysilane, pentyltriethoxysilane, hexyltriethoxysilane, and octyltriethoxysilane. These compounds may be used alone or in combination of two or more thereof. In the present invention, particularly, methyltrimethoxysilane (MTMS) is preferably used as the tri-functional silane compound.

Examples of the di-functional silane compound include dialkoxysilane and diacetoxysilane. Preferred embodiments of the dialkoxysilane include those in which an alkoxy group has 1 to 9 carbon atoms. Specific examples thereof include dimethyldimethoxysilane, diethyldimethoxysilane, and diisobutyldimethoxysilane. These compounds may be used alone or in combination of two or more thereof. In the present invention, particularly, dimethyldimethoxysilane (DMDMS) is preferably used as the di-functional silane compound.

(I-1-2) Mixing ratios of main raw materials (mass percentages)

In the sol formation step, the silicon compound serving as a main raw material includes at least a tetra-functional silane compound and a tri-functional silane compound, among a tetra-functional silane compound, a tri-functional silane compound, and a di-functional silane compound. More specifically, when the mass percentages of the tetra-functional silane compound, the tri-functional silane compound, and the di-functional silane compound are represented by $Qx$, $Tx$, and $Dx$, respectively, at least the tetra-functional silane compound and the tri-functional silane compound are mixed in mixing ratios in which $Qx$, $Tx$, and $Dx$ satisfy $0 < Qx < 50$, $50 \leq Tx < 100$, $0 \leq Dx < 30$, and $Qx + Tx + Dx = 100$.

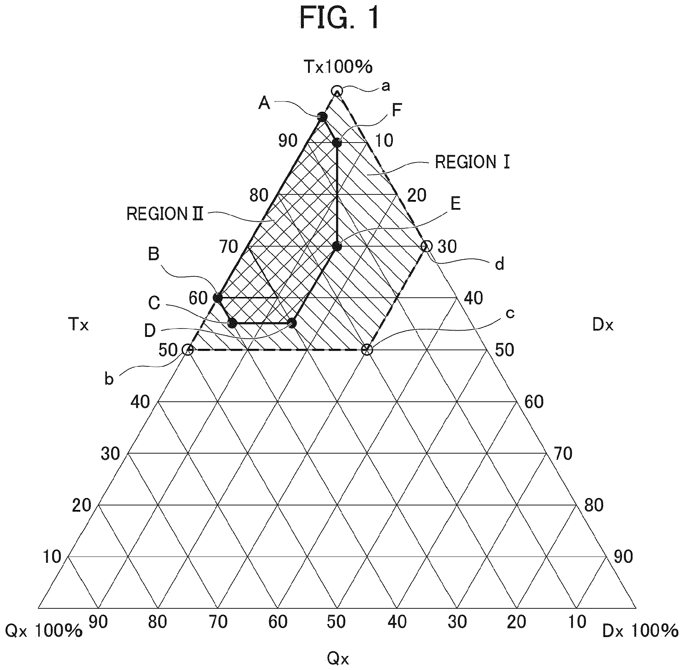

FIG. 1 is a triangular diagram having $Qx$, $Tx$, and $Dx$ as coordinate axes, and in the triangular diagram, an appropriate range of $Qx$, $Tx$, and $Dx$ is indicated, provided that $Qx$, $Tx$, and $Dx$ are mass percentages of each of a tetra-functional silane compound, a tri-functional silane compound, and a di-functional silane compound, respectively, which have been mixed in the mixing step of the production method of the first embodiment. Region I shown in FIG. 1 is an appropriate range for $Qx$, $Tx$, and $Dx$. Region I shown in FIG. 1 has four vertices a to d, and is a region partitioned into a trapezoidal shape (hatched with a diagonal line downward to the right). Note that vertices a to d are denoted by open circle symbols (o) (open circles) because none of them are included in region I. A straight line connecting the vertex a and the vertex b and a straight line connecting the vertex b and the vertex c are included in region I, and a straight line connecting the vertex c and the vertex d and a straight line connecting the vertex d and the vertex a are not included in region I.

The aforementioned region I shows the range in which $0 < Qx < 50$, $50 \leq Tx < 100$, $0 \leq Dx < 30$, and $Qx + Tx + Dx = 100$ are satisfied, and by mixing the silicon compounds in mass percentages satisfying the range of such region I, it is possible to produce an aerogel having fewer defects such as cracks and having a density of $0.15$ g/cm$^3$ or less. The aerogel produced by the mixing ratios of region I has further improved thermal insulating characteristics compared to the aerogel disclosed in Patent Document 1 and can be formed into a plate-like or film-like shape having a large area of 400 cm$^2$ or more, which could not be produced in Patent Document 1.

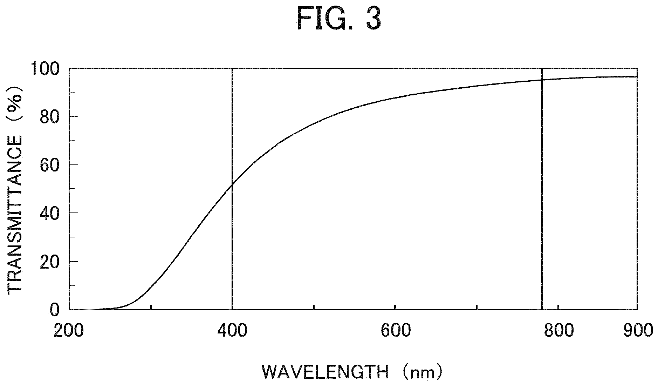

Further, in the production method of an aerogel of the first embodiment, when the respective mass percentages $Qx$, $Tx$, and $Dx$ which are mass percentages of the tetra-functional silane compound, the tri-functional silane compound, and the di-functional silane compound, respectively, are plotted in a triangular diagram ($Qx$, $Tx$, and $Dx$) having $Qx$, $Tx$, and $Dx$ as coordinate axes, it is preferable for the mass percentages $Qx$, $Tx$, and $Dx$ to be present within a range (region II shown in FIG. 1) surrounded by six straight lines each connecting point A (5, 95, 0), point B (40, 60, 0), point C (40, 55, 5), point D (30, 55, 15), point E (15, 70, 15), point F (5, 90, 5), and point A (5, 95, 0) in this order. With the mass percentages $Qx$, $Tx$, and $Dx$ of each of the tetra-functional silane compound, the tri-functional silane compound, and the di-functional silane compound being within the above range, the transmittance in the entire visible light range can be increased. More specifically, it is possible to achieve 40% or more of the minimum value of the transmittance in the wavelength range of 400 to 800 nm, and further, 50% or more of the minimum value of the transmittance in the wavelength range of 500 to 800 nm (see FIG. 3). Incidentally, region II shown in FIG. 1 has six vertices A to F, and is a region partitioned into a hexagonal shape (hatched by diagonal lines upward to the right). Note that vertices A to F are denoted by • (filled circles) because all of them are included in region II. In addition, six straight lines connecting these vertices A to F are also included in region II.

(I-1-3) Auxiliary materials in the sol formation step and sol formation conditions

In the sol formation step, as the main raw material, a tetra-functional silane compound, a tri-functional silane compound, and a di-functional silane compound are mixed at the above-described predetermined mixing ratios, and the resulting mixture is added to a solution containing water and a surfactant. By this preparation, the silane compound is hydrolyzed to produce a sol containing a siloxane bond. Note that a solution to be prepared may include an acid, a nitrogen compound, an organic solvent, an organic compound (e.g., a saccharide) and/or an inorganic compound (e.g., a salt).

The surfactant contributes to formation of a microphase separation structure during the sol formation step and formation of a bulk portion and a pore portion that constitute the aerogel, which will be described below. As a surfactant which can be used for producing the aerogel, a nonionic surfactant, an ionic surfactant, or the like can be used. As the ionic surfactant, a cationic surfactant, an anionic surfactant, a zwitterionic surfactant, and the like can be exemplified. As the surfactant, particularly, a nonionic surfactant is preferably used. The amount of the surfactant added to a solution to be prepared depends on the type and the mixing ratio of the silane compound and the type of the surfactant, but is preferably in the range of 0.001 to 100 parts by mass, more preferably in the range of 0.01 to 90 parts by mass, and most preferably in the range of 0.1 to 80 parts by mass, with respect to 100 parts by mass of the total amount of the silane compound as the main raw material.

The acid can act as a catalyst in hydrolysis and can accelerate the reaction rate of hydrolysis. Specific examples of the acid include an inorganic acid, an organic acid, and an organic acid salt.

Examples of the inorganic acid include hydrochloric acid, sulfuric acid, sulfurous acid, nitric acid, hydrofluoric acid, phosphoric acid, phosphorous acid, hypophosphorous acid, bromic acid, chloric acid, chlorous acid, hypochlorous acid, etc.

Examples of the organic acid include carboxylic acids such as acetic acid, formic acid, propionic acid, oxalic acid, malonic acid, succinic acid, citric acid, malic acid, adipic acid, azelaic acid, etc.

Examples of the organic acid salt include acidic aluminum phosphate, acidic magnesium phosphate, acidic zinc phosphate, etc. These acids may be used alone or as a mixture of two or more of them. In the present invention, acetic acid which is an organic acid is preferably used as the acid.

Further, the addition concentration of acid to the entire solution to be prepared is preferably in the range of 0.0001 mol/L to 0.1 mol/L, more preferably in the range of 0.0005 mol/L to 0.05 mol/L, and most preferably in the range of 0.001 mol/L to 0.01 mol/L.

Specific examples of the nitrogen compound include amide compounds such as urea, formamide, N-methylformamide, N,N-dimethylformamide, acetamide, N-methylacetamide, N,N-dimethylacetamide, etc. and heterocyclic compounds such as hexamethylenetetramine, etc. Particularly, urea contributes to the formation of a fine space structure of the aerogel, and can be suitably used as it achieves homogeneous gelation.

The amount of the nitrogen compound to be added is not particularly limited, but preferably, for example, is in the range of 1 to 200 parts by mass, and more preferably in the range of 2 to 150 parts by mass, with respect to 100 parts by mass of the total amount of the silane compound as the main raw material.

As the organic solvent, alcohols such as methanol, ethanol, n-propanol, 2-propanol, n-butanol, 2-butanol, t-butanol, etc. can be used. These may be used alone or as a mixture of two or more of them. Further, as the addition amount of an organic solvent to the solution to be prepared, it is more preferable to set the amount to the range of 0 to 10 mol, particularly to the range of 0 to 9 mol, and more preferably to the range of 0 to 8 mol, with respect to 1 mol of the total amount of the silicon compound as a main raw material, from the viewpoint of compatibility.

The solution temperature and time required for the sol formation step depend on the type and amount of the silane compound, the surfactant, water, the acid, the nitrogen compound, the organic solvent, and the like in the mixed solution, but may be in the range of 0.05 hours to 48 hours under a temperature environment of, for example, 0°C to 70°C, and treatment for 0.1 hours to 24 hours under a temperature environment of 20 to 50°C is preferred. By the sol formation step performed under such conditions, the silane compound is hydrolyzed, and a liquid sol can be formed as a whole. Note that auxiliary materials used in the sol formation step and/or decomposition products of the auxiliary materials may be entrapped in the aerogel produced as unavoidable components.

(I-2) Wet gel-forming and molding step

A wet gel-forming and molding step can be roughly divided into a step of pouring a liquid sol into a mold for obtaining a desired shape and a step of forming a wet gel by curing the liquid sol poured inside the mold.

The step of pouring the solution (liquid sol) into a mold is a step for obtaining a shape of a desired aerogel product. Although any of metal, synthetic resin, wood, and paper can be used as the mold, it is preferable to use a synthetic resin because of having both flatness of the shape and releasability. Examples of the synthetic resin include polystyrene, polyethylene, polypropylene, polyethylene terephthalate (PET), polycarbonate (PC), silicone, and polytetrafluoroethylene (PTFE).

Since a mold is for obtaining the shape of a desired aerogel product, the mold has a protrusion and recess shape corresponding to the recess and protrusion shape of the desired aerogel product. For example, when the shape of a desired aerogel product is a plate-like shape (rectangular parallelepiped), a recessed tray having one side being opened can be used as a mold. In addition, the mold may be a combination mold composed of a plurality of molds, such as a so-called injection molding mold. As an example, there is a mold including a combination of two pieces in which a recessed mold and a protruded mold that face each other are used. The combination mold may be a combination mold in which an inner surface of the recessed mold and an outer surface of the protruded mold are in a positional relation of being spaced at a predetermined interval. As a result, the solution (liquid sol) may be poured into the internal space of the combination mold and sealed for a predetermined time.

In addition, when a recessed tray having one side being opened is used as a mold, a flat plate covering the entire surface of the open (flat) surface of the recessed tray may be provided as a second mold, and they may be used as the mold composed of a combination of two pieces by placing the open surface of the recessed tray and the second mold so as to face each other. As a result, the solution (liquid sol) may be poured into the interior of the combination mold and sealed for a predetermined time.

Following the step of pouring (filling) the solution (liquid sol) into the mold, there is an aging step in which a crosslinking of the solution is allowed to proceed inside the mold, so as to form and cure a wet gel.

Curing is to apply a predetermined energy over a predetermined period of time and advance the crosslinking of the wet gel. An example of energy is heat (temperature), and heating between 30 and 90°C, and preferably between 40 and 80°C is used. Heating may be heating by heater or vapor heating using water or an organic solvent.

Further, as another example of energy, application of electromagnetic waves such as infrared rays, ultraviolet rays, microwave, gamma rays, etc., application of electron beams, etc. may be mentioned. These energies may be used alone or in combination of a plurality of means.

The time required for curing depends on the composition of the silicon compounds and the type and amount of the surfactant, water, acid, nitrogen compound, organic solvent, basic catalyst, and the like, as well as the type and density of energy, but is a period of more than 24 hours and no more than 7 days. In addition, curing may be a curing in which heat (temperature) and time are changed in a stepwise manner. Note that materials used in the wet gel-forming and molding step and/or decomposition products of the materials may be entrapped in the aerogel produced as unavoidable components.

(I-3) Solvent exchange step

A solvent exchange step is an essential step in the method for producing an aerogel of the present invention in which water and/or an organic solvent present on the surface and inside the wet gel is replaced with an organic solvent which can be dried at a normal pressure to thereby produce an aerogel, and is a step of replacing with an organic solvent (hydrocarbon solvent) having a low surface energy in order to reduce a capillary force expressed by Young-Laplace equation as much as possible. Further, the solvent exchange step may be performed after removal from the above-described mold, or may be performed in the mold.

Since the hydrocarbon solvent used for solvent exchange is not miscible with water, in the solvent exchange step, firstly, water and/or an organic solvent present on the surface and inside the wet gel is exchanged into an intermediate solvent such as an alcohol that is miscible with a hydrocarbon solvent, and then the intermediate solvent is exchanged into an organic solvent (hydrocarbon solvent) having a low surface energy. Examples of the alcohol used in the intermediate solvent include methyl alcohol, ethyl alcohol, n-propyl alcohol, isopropyl alcohol (IPA), and butanol.

In the solvent exchange step, in order to suppress shrinkage damage of the gel in the drying step to be performed thereafter, water (or an organic solvent) on the surface and inside the wet gel is replaced with an organic solvent having a surface tension of 45 mN/m or less at 20°C. Examples thereof include dimethyl sulfoxide (43.5 mN/m), cyclohexane (25.2 mN/m), isopropyl alcohol (21 mN/m), heptane (20.2 mN/m), pentane (15.5 mN/m), and the like. The organic solvent used in the solvent exchange step has a surface tension at 20°C of 45 mN/m or less, 40 mN/m or less, 35 mN/m or less, 30 mN/m or less, 25 mN/m or less, 20 mN/m or less, or 15 mN/m or less, and may be 5 mN/m or more, 10 mN/m or more, 15 mN/m or more, or 20 mN/m or more. Among them, it is suitable to use, in particular, an organic solvent containing an aliphatic hydrocarbon which has a surface tension at 20°C in the range of 20 to 40 mN/m. The organic solvent may be used alone or as a mixture of two or more thereof.

Although the used amount of solvent in the solvent exchange step depends on the temperature at which or the device (container) in which the solvent is exchanged and, it is desirable to use an amount of 2 to 100 times the volume of the wet gel. The solvent exchange is not limited to one time, and may be performed a plurality of times. As a method of replacing the solvent, any of total replacement, partial replacement, and cyclic replacement may be used. When the solvent exchange is performed a plurality of times, the type of the organic solvent, the temperature, and the processing time may be independently set for each time. Note that materials used in the solvent exchange step and/or decomposition products of the materials may be entrapped as an unavoidable component in the aerogel produced.

The solvent exchange step can be carried out by the following procedure as an example of the specific embodiment. Firstly, the wet gel is immersed in a methanol (MeOH) solution corresponding to 5 times the wet gel volume to perform solvent exchange under the condition of 60°C for 8 hours. The solvent exchange using MeOH solution is preferably repeated a plurality of times (e.g., five times). An object of the solvent exchange using a MeOH solution is to remove moisture, and unreacted components of raw materials and side reaction products of raw materials in the wet gel. Secondly, the wet gel after performing the solvent exchange using a MeOH solution is further subjected to solvent exchange under the condition of 8 hours at 60°C by immersing the wet gel in a mixed solution of isopropyl alcohol (IPA) and heptane (Hep) in an amount corresponding to 5 times the volume of the wet gel, with IPA and Hep being mixed in a volume ratio of 1:4 to 1:3. Since MeOH does not directly mix with Hep, an IPA/Hep mixed solution can be used to remove MeOH in the wet gel. Thereafter, the wet gel subjected to the solvent exchange using an IPA/Hep mixed solution is immersed in a Hep solution in an amount corresponding to 5 times the wet gel volume, and further solvent exchange is performed under conditions of 8 hours at 60°C. The solvent exchange using the Hep solution is preferably repeated two or more times (e.g., two times) An object of the solvent exchange using a Hep solution is to replace all the solvent in the wet gel with a Hep solution which is a dry solvent.

(I-4) Drying step

A drying step is a step of drying the wet gel subjected to the solvent exchange described above to obtain an aerogel having a predetermined shape and properties. Although there is no particular limitation on the method of drying, it is preferable not to use a supercritical drying method but to use an atmospheric pressure drying method, because the supercritical drying method has a problem that the facility becomes large in size, the production cost is remarkably expensive, and mass production is difficult. Note that an atmospheric pressure refers to 300 hPa to 1100 hPa, which is an atmospheric pressure on the ground, and there is no limitation on the altitude at which the present invention is implemented as long as it is on the ground. In other words, as the drying method, drying the aerogel by reducing the pressure to about 300 hPa is also encompassed in the present invention.

From the above, by performing steps (I-1) to (I-4) described above, it is possible for the production method of an aerogel of the first embodiment to produce an aerogel of the present invention which has a low density (0.15 g/cm$^3$ or less), a few defects such as cracks, and excellent thermal insulating characteristics as compared with the aerogel described in Patent Document 1. Additionally, the present invention can produce an aerogel having a plate-like or film-like shape having a large area of 400 cm$^2$ (e.g., 20 cm square) or more, which could not be produced in Patent Document 1.

(II) Second embodiment (method for producing an aerogel using two-stage solidification method)

A method for producing an aerogel of the second embodiment uses a two-stage solidification method, and differences from the configuration (steps) of the method for producing an aerogel of the first embodiment using the one-stage solidification method will be described in detail below.

(II-1) Sol formation step

A sol formation step of the method for producing an aerogel of the second embodiment is the same as the sol formation step (I-1) of the method for producing an aerogel of the first embodiment.

(II-2) Wet gel formation and molding step

In a wet gel formation and molding step of the second embodiment, a basic aqueous solution (basic catalyst) is added to the formed liquid sol to thereby form a wet gel.
Therefore, in the sol formation step (II-1), it is not necessarily required to add, during heating in the wet gel formation, a nitrogen compound such as urea as a compound to generate a basic catalyst, as in the sol formation step (I-1) of the first embodiment. However, since urea contributes to formation of a fine space structure in the aerogel and has an effect of achieving homogeneous gelation, urea may also be added in the sol formation step (II-1) when such an effect is required to be achieved. In addition, when urea is added, in order to prevent urea from serving as a gelation catalyst (basic catalyst), a solution temperature in the sol formation step (II-1) is preferably set to less than a hydrolysis temperature of urea (e.g., less than 40°C) from the viewpoint of suppressing hydrolysis of urea (a reaction in which ammonia and carbon dioxide are released proceeds at about 50°C or more). Other configurations of the sol formation step (II-1) are the same as those of the sol formation step (I-1) of the first embodiment. Specifically, the wet gel formation and molding step can be roughly divided into a step of adding a basic aqueous solution (basic catalyst) to a liquid sol produced in the sol formation step (II-1), a step of pouring the liquid sol into a mold for obtaining a desired shape, and a step of forming a wet gel by curing the liquid sol poured inside the mold.

The basic aqueous solution is a solution in which a base is dissolved in water at a given concentration. As the base used in the basic aqueous solution, both inorganic and organic bases may be used. Examples of the inorganic base include lithium hydroxide, sodium hydroxide, potassium hydroxide, ammonia, etc. As the organic base, for example, pyridine, triethylamine, tetramethylammonium, tetraethylammonium, or the like may be used. Preferably, tetramethylammonium is used.

The concentration of the basic aqueous solution is preferably in the range of 0.001 to 10 M (mol/L), more preferably in the range of 0.01 to 5 M, and most preferably in the range of 0.1 to 1 M. Further, the addition amount of the basic aqueous solution is preferably in the range of 0.001 to 50% by mass, more preferably in the range of 0.01 to 5% by mass, and most preferably in the range of 0.1 to 1% by mass, with respect to the liquid sol. When the addition amount is less than 0.001 parts by mass, the reaction from a sol to a wet gel tends to not sufficiently proceed, and when the addition amount is more than 50 parts by mass, the siloxane bond formed may be broken, and heterogeneity may occur together with a delay in gelation time. In particular, an aqueous solution of tetramethylammonium is preferred in that it has a high reaction promoting effect as a catalyst, and a reaction of a sol to a wet gel can proceed in a short time, with occurrence of few defects.

In addition, in the method for producing an aerogel of the second embodiment, once a basic aqueous solution is added to the generated liquid sol, gelation (solidification) starts and the reaction proceeds relatively quickly, so that time required for gelation can be shortened as compared with the production method of the first embodiment. For example, when the type of basic catalyst and the type of energy are optimized, gelation can be completed in a time as short as 0.01 hours to 24 hours.

In addition, in the wet gel formation and molding step (II-2), it is preferable that the liquid sol to which the basic aqueous solution has been added is stirred to homogenize. Thereby, it is possible to prevent the gelation from proceeding locally, resulting in a heterogeneous reaction. Then, after the liquid sol is stirred to achieve homogenization, the liquid sol is poured into a mold and cured, so that it can be gelled. As stirring conditions of the liquid sol, for example, a stirring speed of 10 rpm or more and a stirring time of 0.01 minutes (0.6 seconds) to 1440 minutes (24 hours) may be used in an open vessel at room temperature (25°C) under an atmosphere at an atmospheric pressure.

Other configurations of the wet gel-forming and molding step (II-2) are the same as those of the wet gel formation and molding step (I-2) of the first embodiment.

(II-3) Solvent exchange process

The solvent exchange step of the second embodiment is the same as the solvent exchange step (I-3) of the first embodiment.

(II-4) Drying process

The drying step of the second embodiment is the same as the drying step (I-4) of the first embodiment.

From the above, by performing steps (II-1) to (II-4) described above, the production method of an aerogel of the second embodiment can produce an aerogel having few defects such as cracks at a low density (0.15 g/cm$^3$ or less), thus having excellent thermal insulating characteristics as compared with the aerogel described in Patent Document 1. Additionally, the production method of an aerogel of the second embodiment can produce a plate-like or film-like shape having a large area of 400 cm$^2$ (e.g., 20 cm square) or more, which could not be produced in Patent Document 1.

(Other steps)

Although a method for producing an aerogel having a plate (or a rectangular parallelepiped)-like or film-like shape has been explained, the present invention is not limited thereto, but may include processing from a plate-like aerogel into an aerogel in a desired shape, as an optional step. For example, a plate (or rectangular parallelepiped) can be processed into a variety of shapes, such as rectangular, circular plates or films, cubes, spheres, cylinders, pyramids, cones, and the like. For processing methods, it is possible to use a known machining such as wire cut, water jet, etc.

In addition, the aerogel of the present invention may include processing from a rectangular parallelepiped aerogel into a particulate aerogel as an optional step. As the processing method, a known crusher such as a jaw crusher, a roll crusher, a ball mill, etc. can be used. By processing into particles in this manner, it is also possible to produce aerogel powder having a density of 0.15 g/cm$^3$ or less.

(III) Third embodiment (aerogel)

Next, an aerogel of the third embodiment will be described. In the aerogel of the present invention, the signal area integral values derived from the tetra-functional silane Q component, the tri-functional silane T component and the di-functional silane D component, which are measured by solid-state $^{29}$Si-NMR (DD-MAS method), satisfy $0 < Q < 50$, $50 \leq T < 100$, and $0 \leq D < 30$, respectively, and $Q + T + D = 100$, and the density is 0.15 g/cm$^3$ or less. The aerogel is formed as a single plate or a single film

(2-1) Internal structure of aerogel

When the structure of the aerogel of the present invention is microscopically observed, it is mainly composed of a bulk portion (skeleton portion) filled with a solid matter and a pore portion penetrating through the bulk portion in a three-dimensional network-like state.

The bulk portion is composed of a continuum in which a solid material forms a three-dimensional network by siloxane bonding. In the three-dimensional network, when a lattice, which is the smallest unit of the network, is approximated by a cube, length of one side is 2 nm or more and 25 nm or less. Note that the average length of one side is preferably 2 nm or more, 5 nm or more, 7 nm or more, and 10 nm or more, and is preferably 25 nm or less, 20 nm or less, and 15 nm or less.

Further, the pore portion forms a tube shape penetrating through the bulk portion, and when the pores are approximated by tubes and the inner diameter of the tube is approximated by a circle, the average inner diameter is 5 nm or more and 100 nm or less. Note that the average inner diameter of the pores is preferably 5 nm or more, 7 nm or more, 10 nm or more, 20 nm or more, 30 nm or more, or 50 nm or more, and is preferably 100 nm or less, 90 nm or less, 80 nm or less, or 70 nm or less. Herein, the inner diameter of the tube has a dimension equal to or smaller than a mean free path (MFP) at an atmospheric pressure of molecules of elements constituting the air. In addition, the porosity of the aerogel, that is, the ratio of a volume of the pore portion occupying the volume of the entire aerogel is 70% or more. An example of porosity may be 75% or more, 80% or more, 85% or more, or 90% or more.

Note that the aerogel of the third embodiment may include a structure other than the bulk portion and the pore portion described above, as long as the aerogel satisfies physical characteristics that will be described below. As an example, a vacant space (a void) different from the pore portion described above may be included. Further, as another example, water, an organic solvent, a surfactant, a catalyst, and decomposition products thereof, which remain as unavoidable components generated in the production may be included, as long as the aerogel satisfies physical characteristics that will be described below. Further, as another example, dust entrapped into an aerogel from the production space or production apparatus may be included in the aerogel as an unavoidable component generated in production, as long as the aerogel satisfies the physical characteristics that will be described below.

In addition to the above-described configurations, the aerogel of the third embodiment may include a component added for the purpose of imparting functionality, improving appearance, imparting decorativeness, and the like. For example, the aerogel of the third embodiment may include an antistatic agent, a lubricant, an inorganic pigment, an organic pigment, an inorganic dye, and an organic dye.

(2-2) Size of aerogel

In the production method described in Patent Document 1, only an aerogel having a size (area) of about several centimeters square could be produced, even though a fabricable area was large. On the other hand, the aerogel of the third embodiment can be molded into a plate-like or film-like shape having a large area of 400 cm$^2$ or more.

Although there is no limitation on the size of the aerogel, it is preferable to mold the aerogel into a plate-like or film-like shape having an area of 400 cm$^2$ or more, when the aerogel is applied to an application requiring a large area, such as a thermal insulating material for construction, for example. The aerogel may be molded, for example, as a single plate (monolithic plate).

An example of the size of the plate-shaped aerogel includes a case where a length dimension is 300 mm, a width dimension is 300 mm, and a thickness dimension is 10 mm. When an aerogel is produced in a plate shape, both of the length dimension and the width dimension are 100 mm or more, preferably 200 mm or more, and more preferably 300 mm or more, and the thickness dimension is preferably 1 mm or more and 100 mm or less, and preferably 1 mm or more and 10 mm or less.

The aerogel can also be formed as a single film or thin film. One example of a size of a film-like aerogel includes a circular film (including a coating film) having a diameter of 304.8 mm (12 inches) and a thickness of 500 um. A suitable size of circular film is 50.8 mm (2 inches) or more in diameter, preferably 101.60 mm (4 inches) or more, more preferably 203.20 mm (8 inches) or more, and most preferably 304.8 mm (12 inches) or more, and a thickness dimension is preferably in the range of 10 to 500 $\mu$m.

(2-3) Chemical structure of aerogel

The aerogel of the third embodiment is a solid containing a siloxane bond as described above, and its binding state can be measured and analyzed in detail using a solid-state nuclear magnetic resonance spectrometer (solid-state NMR). Thus, it was examined whether or not there is a relationship between the Q component, the T component, and the D component and Qx, Tx, and Dx, which are mass percentages of the tetra-functional silane compound, the tri-functional silane compound, and the di-functional silane compound which are main raw materials for producing the aerogel, by measuring the aerogel of the third embodiment by solid $^{29}$Si-NMR, calculating signal area integral values derived from the Q component, the T component, and the D component. As a result, it was found that the mass percentages of the signal area integral values each derived from the Q component, T component, and D component relative to the total of the signal area integral values of the Q component, T component, and D component can have a high correlation with Qx, Tx, and Dx, which are mass percentages of a mixture of the silicon compounds serving as a main raw material.

Therefore, it is possible to produce an aerogel having a large area of 400 cm$^2$ or more and further improved thermal insulating characteristics compared to the aerogel disclosed in Patent Document 1, by setting the mass percentages Q, T, and D calculated from the respective signal area integral values, which are measured by solid $^{29}$Si-NMR and which are derived from the Q component, the T component, and the D component, to a similar range of Qx, Tx, and Dx, which are mass percentages of a mixture of silicon compounds serving as main raw materials, that is, by making the mass percentages Q, T, and D satisfy $0 < Q < 50$, $50 \leq T < 100$, $0 \leq D < 30$, respectively, and $Q + T + D = 100$ and setting the density to 0.15 g/cm$^3$ or less.

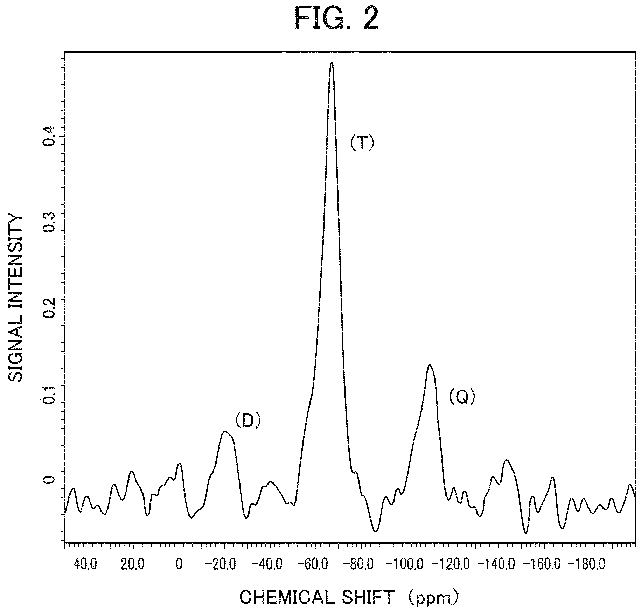

FIG. 2 shows NMR data of the aerogel of Example 1-27 as an example of the aerogel of the third embodiment. When the aerogel of the third embodiment is measured using a solid-state NMR spectrometer (JNM-ECA400 manufactured by JOEL Ltd., proton resonance frequency: 390 MHz, time: 750 seconds/time, integration number: 48 times, total measurement time: 10 hours), the measured spectrum is composed of a plurality of peaks when macroscopically observed. Specifically, in a measurement using a solid-state $^{29}$Si-NMR as a measurement instrument and using a magic angle spinning method (DD) and a dipolar dephasing method, when peaks of signal intensities are observed at a chemical shift of around -110 ppm, around -65 ppm, and around -20 ppm, as shown in FIG. 2, the respective peaks with signal intensities indicate that a bonding state having four siloxane bonds (herein referred to as a tetra-functional component or a Q component), a bonding state having three siloxane bonds (herein referred to as a tri-functional component or a T component), and a bonding state having two siloxane bonds (herein referred to as a di-functional component or a D component) exist. Further, by integrating the respective peaks having signal intensities of the Q component, the T component, and the D component, including their skirt portions, to calculate signal area integral values, it is possible to quantify a relative ratio (mass percentage) of each of the Q component, T component, and D component.

In this specification, when the signal area integral values of the Q component, the T component, and the D component are represented by Aq, At, and Ad, respectively, the mass percentages (Q, T, D) measured by NMR of each component are defined as follows.

Q (%) : 100Aq/ (Aq + At + Ad)

T (%): 100At/(Aq + At + Ad)

D (%) : 100Ad/ (Aq + At + Ad)

$$Q\ (\%)\ +\ T\ (\%)\ +\ D\ (\%)\ =\ 100$$

Note that Q (%), T (%) and D (%) calculated by the above formulas may be referred to as calculated mass percentages. In addition, in this specification, Q (%) : T (%) : D (%) may be referred to as a calculated mass constitution ratio.

Table 1 shows Q (mass%), T (mass%), and D (mass%), which are mass percentages calculated by solid-state $^{29}$Si-NMR measurement, with regard to Examples 1-6 and 1-27. Further, for comparison, Table 1 also indicate Qx (mass%), Tx (mass%), and Dx (mass%), which are mass percentages of the tetra-functional silane compound, the tri-functional silane compound, and the di-functional silane compound, respectively, as the main raw materials to be mixed into an aqueous solution in the sol formation step.

[Table 1]

| Sample No. | NMR measurement result | | | | Mixing ratio of main raw material | | | | |
|---|---|---|---|---|---|---|---|---|---|
| | Q | T | D | Total | Qx | Tx | Dx | Total | |
| | (mass%) | (mass%) | (mass%) | (mass%) | (mass%) | (mass%) | (mass%) | (mass%) | |
| 1-6 | 22.59 | 77.41 | 0 | 100 | 25 | 75 | 0 | 100 | Example |
| 1-27 | 22.73 | 68.86 | 8.41 | 100 | 25 | 65 | 10 | 100 | |

From the results shown in Table 1, Q (mass%), T (mass%) and D (mass%) measured and calculated by NMR showed a similar tendency to mass percentages of the main raw materials: Qx (mass%), Tx (mass%), and Dx (mass%). Thus, Q, T, and D were found to be highly correlated with Qx, Tx, and Dx. In the quantitative analysis of NMR performed this time, the DD-MAS method was used, but since the DD-MAS method is a less sensitive measurement method, a variation was observed in the obtained data.

From the above, in the aerogel of the third embodiment, the mass percentages Q, T, and D, which are calculated from the signal area integral values measured by solid-state $^{29}$Si-NMR and which are derived from the Q component, the T component, and the D component, satisfy $0 < Q < 50$, $50 \leq T < 100$, and $0 \leq D < 30$, respectively, and Q + T + D = 100. Further, in the aerogel of the third embodiment, mass percentages Q, T, and D satisfy the above range, and thereby it is possible to produce an aerogel having few defects such as cracks at a low density (0.15 g/cm$^3$ or less), and as a result, it is possible to produce, in particular, an aerogel having a large area of 400 cm$^2$ or more and further improved thermal insulating characteristics as compared with the aerogel disclosed in Patent Document 1.

Further, since the mass percentages Q, T, and D, which are derived from the Q component, the T component, and the D component and which are calculated from the signal area integral values measured by $^{29}$Si-NMR, exhibit a similar tendency to the mass percentages of the main raw materials, Qx (%), Tx (%), and Dx (%), when plotted on the triangular diagram composition coordinates (Q, T, D), it is preferable for Q, T, and D to be present within a range surrounded by six straight lines connecting point A' (5, 95, 0), point B' (40, 60, 0), point C' (40, 55, 5), point D' (30, 55, 15), point E' (15, 70, 15), point F' (5, 90, 5), and point A' (5, 95, 0) in this order. By setting the mass percentages Q, T and D within the above range, transmittance in the entire visible light range can be increased. More specifically, it is possible to achieve a minimum value of transmittance of 40% or more in the wavelength range of 400 to 800 nm, and even a minimum value of 50% or more of transmittance in the wavelength range of 500 to 800 nm.

FIG. 3 is a diagram illustrating transmittance spectral data of the aerogel of the present invention (Example 1-27). From the results shown in FIG. 3, it can be seen that the aerogel of the present invention (Example 1-27) has a minimum value of transmittance of 40% or more in the wavelength range of 400 to 800 nm, and further, a minimum value of 50% or more of transmittance in the wavelength range of 500 to 800 nm.

(2-4) Density of aerogel

The aerogel of the present invention has a density as low as 0.15 g/cm$^3$ or less. Herein, the density is obtained by a mercury penetration method. The lower the density, the smaller the thermal conductivity of the aerogel, thereby the thermal insulating characteristics being improved. Since the aerogel of the present invention has a density of 0.15 g/cm$^3$ or less, the thermal conductivity is as small as 0.015 W/m·K or less, and has superior thermal insulating characteristics to the aerogel of Patent Document 1.

(2-5) Visible light transmittance of aerogel

The aerogel of the present invention preferably has a minimum value of transmittance of 40% or more in a wavelength range of 400 to 800 nm. In addition, a minimum value of transmittance of 50% or more in a wavelength range of 500 to 800 nm is more preferable in that the aerogel can be used for a member or the like that requires a characteristic of transmitting visible light.

Herein, the light transmittance was measured by using an ultraviolet/visible spectrophotometer (V-530 manufactured by JASCO Corporation). It was set as follows: photometric mode: %T, response: fast, band width: 2.0 nm, scan rate: 2,000 nm/min, range of measurement wavelength: 1,000 nm to 200 nm, and data capture interval: 2.0 nm.

With respect to the light transmittance, data obtained at the wavelength between 400 nm and 800 nm (visible light region) were employed and then were corrected into the value to be obtained when the aerogel had a thickness of 10 mm. The transmittance $T_C$ (%) after thickness correction is expressed by the following formula obtained by varying Lambert's formula.

$$T_C = (T/100)^{(10/d)} \times 100$$

where T is a transmittance (%) obtained before the correction and d is a thickness of a measurement sample.

(2-6) Application of aerogel

The aerogel of the present invention can be used, for example, in thermal insulating windows, thermal insulating building materials, Cherenkov light detecting elements, space dust capturing materials, impact absorbers, water repellent materials, catalyst carriers, glass solidification base materials of a nuclear waste, and the like. In particular, aerogels that are not colored and have high visible light transmittance can be used as an alternative to, for example, thermal insulating glass, and can be applied to a thermal insulating window which is lighter in weight and superior in thermal insulating characteristics to glass.

It should be noted that the above description is merely illustrative of embodiments of the present invention, and various modifications can be made in the claims.

EXAMPLES

Hereinafter, the Examples of the present invention will be described.

· Sample numbers 1-1 to 1-53 (one-step solidification method)

As a surfactant, 3.28 g of a nonionic surfactant (manufactured by BASF: Pluronic PE9400) was dissolved in 28.96 g of a 0.005 mol/L acetic acid aqueous solution, and then 4.00 g of urea (manufactured by Nacalai Tesque) was further added as a hydrolyzable compound and dissolved. To this aqueous solution, 10.00 g of silicon compound as a main raw material was added, followed by stirring and mixing at room temperature for 60 minutes, and a hydrolysis reaction of the silicon compound was performed to form a sol. The silicon compound was selected from tetramethoxysilane, which is a tetra-functional silane compound (methyl orthosilicate manufactured by Tama Chemicals Co., Ltd., hereinafter sometimes abbreviated as "TMOS"), methyltrimethoxysilane, which is a tri-functional silane compound (DOWSIL Z-6366 Silane manufactured by Dow and Toray Joint Venture, hereinafter sometimes abbreviated as "MTMS"), and dimethyldimethoxysilane, which is a di-functional silane compound (manufactured by Tokyo Chemical Industry Co., Ltd., product code: D1052, hereinafter sometimes abbreviated as "DMDMS") and added at a mass percentage Qx of the tetra-functional silane compound, a mass percentage Tx of the tri-functional silane compound, and a mass percentage Dx of the di-functional silane compound shown in Table 2. Note that both TMOS and MTMS were purified by vacuum distillation prior to use. Thereafter, the formed sol was allowed to stand at 60°C in a hermetic container to gel. Thereafter, the wet gel was aged by subsequent standing for 96 hours. Then, the wet gel was taken out from the hermetic container and was immersed in a methanol (MeOH) solution in a volume corresponding to a 5 times volume of the wet gel volume, and solvent exchange was repeated 5 times under conditions of 8 hours at 60°C. Then, the wet gel was immersed in an IPA/Hep mixed solution, in which isopropyl alcohol (IPA) and heptane (Hep) were mixed in a volume ratio of 1:4 to 1:3, in a volume corresponding to a 5 times volume of the wet gel volume, and further solvent exchange was performed under conditions of 8 hours at 60°C. Then, the wet gel was immersed in a Hep solution in a volume corresponding to a 5 times volume of the wet gel volume, and further solvent exchange was repeated 2 times under conditions of 8 hours at 60°C. Note that both of methanol and isopropanol used for the solvent exchange were those manufactured by Nacalai Tesque.

The wet gel was dried at an atmospheric pressure (atmospheric pressure drying) by the following method.

As a low surface tension solvent, heptane (manufactured by Nacalai Tesque) was used, and the solvent in the wet gel was exchanged (replaced) with the low surface tension solvent.

The wet gel was put in the low surface tension solvent in an amount in which the wet gel was sufficiently immersed, and was heated to around 55°C, the boiling point, and refluxing was carried out for 8 hours. After refluxing, the low surface tension solvent in the vessel was removed after being cooled to room temperature, and the low surface tension solvent was replaced with a fresh one and refluxing was further performed. This operation was repeated three times or more, and the solvent exchange to the low surface tension solvent was completed.

Next, the solvent in the wet gel was exchanged into (replaced with) a low surface tension solvent, then the wet gel was placed in a container (dryer) capable of controlling an evaporation rate, and drying was started. When the gel weight became constant, drying was terminated, and a plate-like aerogel was produced.

· Sample numbers 2-1 to 2-53 (two-step solidification method)

As a surfactant, 3.28 g of a nonionic surfactant (Pluronic PE9400 manufactured by BASF) was dissolved in 28.96 g of an aqueous 0.005 mol/L acetic acid solution, and then 4.00 g of urea (manufactured by Nacalai Tesque) was further added as a hydrolyzable compound and dissolved. To this aqueous solution, 10.00 g of silicon compound as a main raw material was added, followed by stirring and mixing at room temperature for 60 minutes, and a hydrolysis reaction of the silicon compound was performed to form a sol. The silicon compound was selected from tetramethoxysilane, which is a tetra-functional silane compound (methyl orthosilicate manufactured by Tama Chemicals Co., Ltd., hereinafter sometimes abbreviated as "TMOS"), methyltrimethoxysilane, which is a tri-functional silane compound (DOWSIL Z-6366 Silane manufactured by Dow and Toray Joint Venture, hereinafter sometimes abbreviated as "MTMS"), and dimethyldimethoxysilane, which is a di-functional silane compound (manufactured by Tokyo Chemical Industry Co., Ltd., product code: D1052, hereinafter sometimes abbreviated as "DMDMS") and added at a mass percentage Qx of the tetra-functional silane compound, a mass percentage Tx of the tri-functional silane compound, and a mass percentage Dx of the di-functional silane compound shown in Table 2. Note that both TMOS and MTMS were purified by vacuum distillation prior to use. Then, to the formed sol, a basic aqueous solution was added in an open container at room temperature (25°C) under an atmosphere at an atmospheric pressure, and stirred. Thereby, the sol was gelled. Thereafter, the wet gel was aged by subsequent standing for 96 hours. Then, the wet gel was taken out from the hermetic container, and was immersed in a methanol (MeOH) solution in a volume corresponding to a 5 times volume of the wet gel volume, and the solvent exchange was repeated 5 times under conditions of 8 hours at 60°C. Then, the wet gel was immersed in an IPA/Hep mixed solution, in which isopropyl alcohol (IPA) and heptane (Hep) were mixed in a volume ratio of 1:4 to 1:3, in a volume corresponding to a 5 times volume of the wet gel volume, and further solvent exchange was performed under conditions of 8 hours at 60°C. Then, the wet gel was immersed in a Hep solution in a volume corresponding to a 5 times volume of the wet gel volume, and further solvent exchange was repeated 2 times under conditions of 8 hours at 60°C. Note that both of methanol and isopropanol used for the solvent exchange were those manufactured by Nacalai Tesque. Thereafter, the same method as that of Example 1-1 described above was carried out and a plate-like aerogel was produced.

Tables 2 and 3 show the mass percentages Qx, Tx, and Dx (mass%) of the tetra-functional silane compound, the tri-functional silane compound, and the di-functional silane compound used for the silicon compound as the main raw materials, the density of the aerogel (g/cm$^3$), the minimum value (%) of the light transmittance in the visible light region (400 to 800 nm) and the evaluation thereof, the evaluation regarding whether the minimum value of the light transmittance at 500 to 800 nm is 50% or more, and the evaluation of the fabricable size (area) of the aerogel.

(Evaluation method)

1. Method of measuring density of aerogels

The density of an aerogel was calculated from a volume obtained by shaping the aerogel into a rectangular parallelepiped and measuring each side with a caliper, and a mass weighed by a balance. The calculation results of the density of the aerogel are shown in Tables 2 and 3.

2. Method of measuring light transmittance

Measurement of light transmittance was performed using an ultraviolet/visible spectrophotometer (V-530 manufactured by JASCO Corporation). It was set as follows: photometric mode: %T, response: fast, band width: 2.0 nm, scan rate: 2,000 nm/min, range of measurement wavelength: 1,000 nm to 200 nm, and data capture interval: 2.0 nm. With respect to the light transmittance, data obtained at the wavelength between 400 nm and 800 nm (visible light region) were employed and then were corrected into the value to be obtained when the aerogel had a thickness of 10 mm. The transmittance $T_C$ (%) after thickness correction is expressed by the following formula obtained by varying Lambert's formula.

$$T_C = (T/100)^{(10/d)} \times 100$$

where T is a transmittance (%) obtained before the correction and d is a thickness of a measurement sample.

Among the light transmittances measured at a wavelength of 400 to 800 nm (visible light region), the minimum values of the light transmittances are shown in Tables 2 and 3. When the light transmittances of these minimum values were 40% or more, the aerogels were evaluated as "good" (indicated by circle symbol ((O)), and when the light transmittances of these minimum values were less than 40%, the aerogels were evaluated as "poor" (indicated by cross symbol (x)). In addition, among the light transmittances measured at a wavelength of 500 to 800 nm, when the minimum values of the light transmittances were 50% or more, the aerogels were evaluated as "good" (indicated by circle symbol ((O)), and when the light transmittances of the minimum values were less than 50%, the aerogels were evaluated as "poor" (indicated by cross symbol (x)). The measurement results of the light transmittances are shown in Tables 2 and 3.

3. Evaluation of fabricable size (area) of aerogel

A fabricable size (area) of aerogel was evaluated as follows. The formed sol was poured into hermetic containers (molds) of 10 cm square (100 cm$^2$), 20 cm square (400 cm$^2$) and a 30 cm square (900 cm$^2$), to produce aerogels by the method described above. The produced aerogels were observed regarding whether or not the density was 0.15 g/cm$^3$ or less and there was no defect such as cracks, and regarding whether or not the shape could be retained. When there was no defect such as cracks, etc. and the shape could be retained, the aerogel was evaluated as "good" (indicated by circle symbol (○)) and when there was a defect such as cracks, the aerogel was evaluated as "poor" (indicated by cross symbol (x)). Evaluation results for fabricable size of aerogel are shown in Tables 2 and 3.

[Table 2-1]

| Sample No. | Qx (mass%) | Tx (mass%) | Dx (mass%) | Total (mass%) | Remarks |
|---|---|---|---|---|---|
| 1-1 | 0 | 100 | 0 | 100 | Comparative Example |
| 1-2 | 5 | 95 | 0 | 100 | Example |
| 1-3 | 10 | 90 | 0 | 100 | Example |
| 1-4 | 15 | 85 | 0 | 100 | Example |
| 1-5 | 20 | 80 | 0 | 100 | Example |
| 1-6 | 25 | 75 | 0 | 100 | Example |
| 1-7 | 30 | 70 | 0 | 100 | Example |
| 1-8 | 35 | 65 | 0 | 100 | Example |
| 1-9 | 40 | 60 | 0 | 100 | Example |
| 1-10 | 45 | 55 | 0 | 100 | Example |
| 1-11 | 50 | 50 | 0 | 100 | Comparative Example |
| 1-12 | 0 | 95 | 5 | 100 | Comparative Example |
| 1-13 | 5 | 90 | 5 | 100 | Example |
| 1-14 | 10 | 85 | 5 | 100 | Example |
| 1-15 | 15 | 80 | 5 | 100 | Example |
| 1-16 | 20 | 75 | 5 | 100 | Example |
| 1-17 | 25 | 70 | 5 | 100 | Example |
| 1-18 | 30 | 65 | 5 | 100 | Example |
| 1-19 | 35 | 60 | 5 | 100 | Example |
| 1-20 | 40 | 55 | 5 | 100 | Example |
| 1-21 | 45 | 50 | 5 | 100 | Example |
| 1-22 | **0** | 90 | 10 | 100 | Comparative Example |
| 1-23 | 5 | 85 | 10 | 100 | Example |
| 1-24 | 10 | 80 | 10 | 100 | Example |
| 1-25 | 15 | 75 | 10 | 100 | Example |
| 1-26 | 20 | 70 | 10 | 100 | Example |
| 1-27 | 25 | 65 | 10 | 100 | Example |
| 1-28 | 30 | 60 | 10 | 100 | Example |
| 1-29 | 35 | 55 | 10 | 100 | Example |
| 1-30 | 40 | 50 | 10 | 100 | Example |
| 1-31 | 0 | 85 | 15 | 100 | Comparative Example |
| 1-32 | 5 | 80 | 15 | 100 | Example |
| 1-33 | 10 | 75 | 15 | 100 | Example |
| 1-34 | 15 | 70 | 15 | 100 | Example |
| 1-35 | 20 | 65 | 15 | 100 | Example |
| 1-36 | 25 | 60 | 15 | 100 | Example |
| 1-37 | 30 | 55 | 15 | 100 | Example |

(continued)

| Sample No. | Qx (mass%) | Tx (mass%) | Dx (mass%) | Total (mass%) | Remarks |
|---|---|---|---|---|---|
| 1-38 | 35 | 50 | 15 | 100 | Example |
| 1-39 | **0** | 80 | 20 | 100 | Comparative Example |
| 1-40 | 5 | 75 | 20 | 100 | Comparative Example |
| 1-41 | 10 | 70 | 20 | 100 | Example |
| 1-42 | 15 | 65 | 20 | 100 | Example |
| 1-43 | 20 | 60 | 20 | 100 | Example |
| 1-44 | 25 | 55 | 20 | 100 | Example |
| 1-45 | 30 | 50 | 20 | 100 | Example |
| 1-46 | 0 | 75 | 25 | 100 | Comparative Example |
| 1-47 | 5 | 70 | 25 | 100 | Comparative Example |
| 1-48 | 10 | 65 | 25 | 100 | Comparative Example |
| 1-49 | 15 | 60 | 25 | 100 | Comparative Example |
| 1-50 | 20 | 55 | 25 | 100 | Comparative Example |
| 1-51 | 25 | 50 | 25 | 100 | Example |
| 1-52 | 20 | 50 | 30 | 100 | Comparative Example |
| 1-53 | 0 | 100 | 0 | 100 | Comparative Example |

[Table 2-2]

| Sample No. | Density | | Minimum value of transmittance in 400 to 800 nm | | Whether or not the minimum value of transmittance in 500 to 800 nm is 50% or more | Fabricable size of aerogel (area) | | | Remarks |
|---|---|---|---|---|---|---|---|---|---|
| | (g/cm$^3$) | Evaluation | (%) | Evaluation | Evaluation | 10 cm square (100cm$^2$) | 20 cm square (400cm$^2$) | 30 cm square (900cm$^2$) | |
| 1-1 | 0.13 | ○ | 41.1 | ○ | ○ | × | × | × | Comparative Example |
| 1-2 | 0.13 | ○ | 97.7 | ○ | ○ | ○ | ○ | × | Example |
| 1-3 | 0.13 | ○ | 56.7 | ○ | ○ | ○ | ○ | × | Example |
| 1-4 | 0.12 | ○ | 58.4 | ○ | ○ | ○ | ○ | × | Example |
| 1-5 | 0.12 | ○ | 61.4 | ○ | ○ | ○ | ○ | × | Example |
| 1-6 | 0.11 | ○ | 58.4 | ○ | ○ | ○ | ○ | × | Example |
| 1-7 | 0.11 | ○ | 61.8 | ○ | ○ | ○ | ○ | × | Example |
| 1-8 | 0.12 | ○ | 60.2 | ○ | ○ | ○ | ○ | × | Example |
| 1-9 | 0.11 | ○ | 40.1 | ○ | ○ | ○ | ○ | × | Example |
| 1-10 | 0.13 | ○ | 24.1 | × | ○ | ○ | ○ | × | Example |
| 1-11 | 0.17 | × | 9.6 | × | × | ○ | ○ | × | Comparative Example |
| 1-12 | 0.14 | ○ | 25.3 | × | × | × | × | × | Comparative Example |
| 1-13 | 0.13 | ○ | 97.1 | ○ | ○ | ○ | ○ | ○ | Example |
| 1-14 | 0.12 | ○ | 55.4 | ○ | ○ | ○ | ○ | ○ | Example |
| 1-15 | 0.13 | ○ | 54.3 | ○ | ○ | ○ | ○ | ○ | Example |
| 1-16 | 0.13 | ○ | 53.0 | ○ | ○ | ○ | ○ | ○ | Example |
| 1-17 | 0.11 | ○ | 58.3 | ○ | ○ | ○ | ○ | ○ | Example |
| 1-18 | 0.12 | ○ | 58.1 | ○ | ○ | ○ | ○ | ○ | Example |
| 1-19 | 0.11 | ○ | 96.5 | ○ | ○ | ○ | ○ | ○ | Example |
| 1-20 | 0.12 | ○ | 41.9 | ○ | ○ | ○ | ○ | ○ | Example |

(continued)

| Sample No. | Density | | Minimum value of transmittance in 400 to 800 nm | | Whether or not the minimum value of transmittance in 500 to 800 nm is 50% or more | Fabricable size of aerogel (area) | | | Remarks |
|---|---|---|---|---|---|---|---|---|---|
| | (g/cm$^3$) | Evaluation | (%) | Evaluation | Evaluation | 10 cm square (100cm$^2$) | 20 cm square (400cm$^2$) | 30 cm square (900cm$^2$) | |
| 1-21 | 0.13 | ○ | 20.6 | × | ○ | ○ | ○ | × | Example |
| 1-22 | 0.14 | ○ | 10.0 | × | × | × | × | × | Comparative Example |
| 1-23 | 0.13 | ○ | 20.9 | × | ○ | ○ | ○ | × | Example |
| 1-24 | 0.12 | ○ | 43 .6 | ○ | ○ | ○ | ○ | ○ | Example |
| 1-25 | 0.13 | ○ | 46.0 | ○ | ○ | ○ | ○ | ○ | Example |
| 1-26 | 0.13 | ○ | 52.3 | ○ | ○ | ○ | ○ | ○ | Example |
| 1-27 | 0.11 | ○ | 50.2 | ○ | ○ | ○ | ○ | ○ | Example |
| 1-28 | 0.12 | ○ | 40.6 | ○ | ○ | ○ | ○ | ○ | Example |
| 1-29 | 0.12 | ○ | 40.2 | ○ | ○ | ○ | ○ | ○ | Example |
| 1-30 | 0.11 | ○ | 29.1 | × | ○ | ○ | ○ | × | Example |
| 1-31 | **0.17** | × | 2.1 | × | × | × | × | × | Comparative Example |
| 1-32 | 0.14 | ○ | 10.2 | × | × | ○ | ○ | × | Example |
| 1-33 | 0.13 | ○ | 25.4 | × | ○ | ○ | ○ | × | Example |
| 1-34 | 0.13 | ○ | 41.1 | ○ | ○ | ○ | ○ | ○ | Example |
| 1-35 | 0.12 | ○ | 40.2 | ○ | ○ | ○ | ○ | ○ | Example |
| 1-36 | 0.13 | ○ | 43.8 | ○ | ○ | ○ | ○ | ○ | Example |
| 1-37 | 0.12 | ○ | 40.3 | ○ | ○ | ○ | ○ | ○ | Example |
| 1-38 | 0.12 | ○ | 35.9 | × | ○ | ○ | ○ | × | Example |
| 1-39 | **0.27** | × | 0.1 | × | × | × | × | × | Comparative Example |

| Sample No. | Density | | Minimum value of transmittance in 400 to 800 nm | | Whether or not the minimum value of transmittance in 500 to 800 nm is 50% or more | Fabricable size of aerogel (area) | | | Remarks |
| --- | --- | --- | --- | --- | --- | --- | --- | --- | --- |
| | (g/cm$^3$) | Evaluation | (%) | Evaluation | Evaluation | 10 cm square (100cm$^2$) | 20 cm square (400cm$^2$) | 30 cm square (900cm$^2$) | |
| 1-40 | **0.18** | × | 1.2 | × | × | ○ | ○ | × | Comparative Example |
| 1-41 | 0.15 | ○ | 11.2 | × | ○ | ○ | ○ | × | Example |
| 1-42 | 0.15 | ○ | 16.4 | × | ○ | ○ | ○ | × | Example |
| 1-43 | 0.13 | ○ | 31.5 | × | ○ | ○ | ○ | × | Example |
| 1-44 | 0.13 | ○ | 31.8 | × | ○ | ○ | ○ | × | Example |
| 1-45 | 0.13 | ○ | 28.2 | × | ○ | ○ | ○ | × | Example |
| 1-46 | **0.37** | × | 0.1 | × | × | × | × | × | Comparative Example |
| 1-47 | **0.27** | × | 0.1 | × | × | ○ | ○ | × | Comparative Example |
| 1-48 | **0.23** | × | 0.1 | × | × | ○ | ○ | × | Comparative Example |
| 1-49 | **0.18** | × | 1.7 | × | × | ○ | ○ | × | Comparative Example |
| 1-50 | **0.18** | × | 18.2 | × | × | ○ | ○ | × | Comparative Example |
| 1-51 | 0.13 | ○ | 20.6 | × | × | ○ | ○ | × | Example |
| 1-52 | **0.21** | × | 0.4 | × | × | ○ | ○ | × | Comparative Example |
| 1-53 | **0.20** | × | 60.0 | ○ | ○ | × | × | × | Comparative Example |

[Table 3-1]

| Sample No. | Qx (mass%) | Tx (mass%) | Dx (mass%) | Total (mass%) | Remarks |
|---|---|---|---|---|---|
| 2-1 | 0 | 100 | 0 | 100 | Comparative Example |
| 2-2 | 5 | 95 | 0 | 100 | Example |
| 2-3 | 10 | 90 | 0 | 100 | Example |
| 2-4 | 15 | 85 | 0 | 100 | Example |
| 2-5 | 20 | 80 | 0 | 100 | Example |
| 2-6 | 25 | 75 | 0 | 100 | Example |
| 2-7 | 30 | 70 | 0 | 100 | Example |
| 2-8 | 35 | 65 | 0 | 100 | Example |
| 2-9 | 40 | 60 | 0 | 100 | Example |
| 2-10 | 45 | 55 | 0 | 100 | Example |
| 2-11 | 50 | 50 | 0 | 100 | Comparative Example |
| 2-12 | 0 | 95 | 5 | 100 | Comparative Example |
| 2-13 | 5 | 90 | 5 | 100 | Example |
| 2-14 | 10 | 85 | 5 | 100 | Example |
| 2-15 | 15 | 80 | 5 | 100 | Example |
| 2-16 | 20 | 75 | 5 | 100 | Example |
| 2-17 | 25 | 70 | 5 | 100 | Example |
| 2-18 | 30 | 65 | 5 | 100 | Example |
| 2-19 | 35 | 60 | 5 | 100 | Example |
| 2-20 | 40 | 55 | 5 | 100 | Example |
| 2-21 | 45 | 50 | 5 | 100 | Example |
| 2-22 | 0 | 90 | 10 | 100 | Comparative Example |
| 2-23 | 5 | 85 | 10 | 100 | Example |
| 2-24 | 10 | 80 | 10 | 100 | Example |
| 2-25 | 15 | 75 | 10 | 100 | Example |
| 2-26 | 20 | 70 | 10 | 100 | Example |
| 2-27 | 25 | 65 | 10 | 100 | Example |
| 2-28 | 30 | 60 | 10 | 100 | Example |
| 2-29 | 35 | 55 | 10 | 100 | Example |
| 2-30 | 40 | 50 | 10 | 100 | Example |
| 2-31 | 0 | 85 | 15 | 100 | Comparative Example |
| 2-32 | 5 | 80 | 15 | 100 | Example |
| 2-33 | 10 | 75 | 15 | 100 | Example |
| 2-34 | 15 | 70 | 15 | 100 | Example |
| 2-35 | 20 | 65 | 15 | 100 | Example |
| 2-36 | 25 | 60 | 15 | 100 | Example |

(continued)

| Sample No. | Qx (mass%) | Tx (mass%) | Dx (mass%) | Total (mass%) | Remarks |
|---|---|---|---|---|---|
| 2-37 | 30 | 55 | 15 | 100 | Example |
| 2-38 | 35 | 50 | 15 | 100 | Example |
| 2-39 | 0 | 80 | 20 | 100 | Comparative Example |
| 2-40 | 5 | 75 | 20 | 100 | Comparative Example |
| 2-41 | 10 | 70 | 20 | 100 | Example |
| 2-42 | 15 | 65 | 20 | 100 | Example |
| 2-43 | 20 | 60 | 20 | 100 | Example |
| 2-44 | 25 | 55 | 20 | 100 | Example |
| 2-45 | 30 | 50 | 20 | 100 | Example |
| 2-46 | 0 | 75 | 25 | 100 | Comparative Example |
| 2-47 | 5 | 70 | 25 | 100 | Comparative Example |
| 2-48 | 10 | 65 | 25 | 100 | Comparative Example |
| 2-49 | 15 | 60 | 25 | 100 | Comparative Example |
| 2-50 | 20 | 55 | 25 | 100 | Comparative Example |
| 2-51 | 25 | 50 | 25 | 100 | Example |
| 2-52 | 20 | 50 | 30 | 100 | Comparative Example |
| 2-53 | 0 | 100 | 0 | 100 | Comparative Example |

[Table 3-2]

| Sample No. | Density | | Minimum value of transmittance in 400 to 800 nm | | Whether or not the minimum value of transmittance in 500 to 800 nm is 50% or more | Fabricable size of aerogel (area) | | | Remarks |
|---|---|---|---|---|---|---|---|---|---|
| | (g/cm³) | Evaluation | (%) | Evaluation | Evaluation | 10 cm square (100cm²) | 20 cm square (400cm²) | 30 cm square (900cm²) | |
| 2-1 | 0.13 | ○ | 42.1 | ○ | ○ | × | × | × | Comparative Example |
| 2-2 | 0.13 | ○ | 45.3 | ○ | ○ | ○ | ○ | × | Example |
| 2-3 | 0.12 | ○ | 53.5 | ○ | ○ | ○ | ○ | × | Example |
| 2-4 | 0.12 | ○ | 55.4 | ○ | ○ | ○ | ○ | × | Example |
| 2-5 | 0.12 | ○ | 62.6 | ○ | ○ | ○ | ○ | × | Example |
| 2-6 | 0.11 | ○ | 59.0 | ○ | ○ | ○ | ○ | × | Example |
| 2-7 | 0.11 | ○ | 55.4 | ○ | ○ | ○ | ○ | × | Example |
| 2-8 | 0.11 | ○ | 59.4 | ○ | ○ | ○ | ○ | × | Example |
| 2-9 | 0.11 | ○ | 40.8 | ○ | ○ | ○ | ○ | × | Example |
| 2-10 | 0.12 | ○ | 19.5 | × | ○ | ○ | ○ | × | Example |
| 2-11 | **0.16** | × | 8.7 | × | × | ○ | ○ | × | Comparative Example |
| 2-12 | 0.14 | ○ | 28.3 | × | × | × | × | × | Comparative Example |
| 2-13 | 0.12 | ○ | 55.3 | ○ | ○ | ○ | ○ | ○ | Example |
| 2-14 | 0.13 | ○ | 54.5 | ○ | ○ | ○ | ○ | ○ | Example |
| 2-15 | 0.11 | ○ | 56.0 | ○ | ○ | ○ | ○ | ○ | Example |
| 2-16 | 0.12 | ○ | 59.0 | ○ | ○ | ○ | ○ | ○ | Example |
| 2-17 | 0.11 | ○ | 55.0 | ○ | ○ | ○ | ○ | ○ | Example |
| 2-18 | 0.13 | ○ | 53.2 | ○ | ○ | ○ | ○ | ○ | Example |
| 2-19 | 0.12 | ○ | 56.0 | ○ | ○ | ○ | ○ | ○ | Example |
| 2-20 | 0.13 | ○ | 43.2 | ○ | ○ | ○ | ○ | ○ | Example |

(continued)

| Sample No. | Density (g/cm³) | Density Evaluation | Minimum value of transmittance in 400 to 800 nm (%) | Minimum value of transmittance in 400 to 800 nm Evaluation | Whether or not the minimum value of transmittance in 500 to 800 nm is 50% or more Evaluation | Fabricable size of aerogel (area) 10 cm square (100cm²) | 20 cm square (400cm²) | 30 cm square (900cm²) | Remarks |
|---|---|---|---|---|---|---|---|---|---|
| 2-21 | 0.13 | ○ | 24.2 | × | ○ | ○ | ○ | × | Example |
| 2-22 | 0.13 | ○ | 12.5 | × | × | × | × | × | Comparative Example |
| 2-23 | 0.12 | ○ | 18.2 | × | ○ | ○ | ○ | × | Example |
| 2-24 | 0.12 | ○ | 44.2 | ○ | ○ | ○ | ○ | ○ | Example |
| 2-25 | 0.12 | ○ | 50.5 | ○ | ○ | ○ | ○ | ○ | Example |
| 2-26 | 0.13 | ○ | 46.3 | ○ | ○ | ○ | ○ | ○ | Example |
| 2-27 | 0.13 | ○ | 97.6 | ○ | ○ | ○ | ○ | ○ | Example |
| 2-28 | 0.13 | ○ | 43.3 | ○ | ○ | ○ | ○ | ○ | Example |
| 2-29 | 0.12 | ○ | 40.9 | ○ | ○ | ○ | ○ | ○ | Example |
| 2-30 | 0.12 | ○ | 26.7 | × | ○ | ○ | ○ | × | Example |
| 2-31 | **0.17** | × | 3.2 | × | × | × | × | × | Comparative Example |
| 2-32 | 0.14 | ○ | 9.5 | × | × | ○ | ○ | × | Example |
| 2-33 | 0.12 | ○ | 24.6 | × | ○ | ○ | ○ | × | Example |
| 2-34 | 0.13 | ○ | 40.8 | ○ | ○ | ○ | ○ | ○ | Example |
| 2-35 | 0.13 | ○ | 43.5 | ○ | ○ | ○ | ○ | ○ | Example |
| 2-36 | 0.12 | ○ | 43.2 | ○ | ○ | ○ | ○ | ○ | Example |
| 2-37 | 0.12 | ○ | 41.5 | ○ | ○ | ○ | ○ | ○ | Example |
| 2-38 | 0.13 | ○ | 33.6 | × | ○ | ○ | ○ | × | Example |
| 2-39 | **0.24** | × | 0.2 | × | × | × | × | × | Comparative Example |

23

(continued)

| Sample No. | Density | | Minimum value of transmittance in 400 to 800 nm | | Whether or not the minimum value of transmittance in 500 to 800 nm is 50% or more | Fabricable size of aerogel (area) | | | Remarks |
|---|---|---|---|---|---|---|---|---|---|
| | $(g/cm^3)$ | Evaluation | (%) | Evaluation | Evaluation | 10 cm square $(100cm^2)$ | 20 cm square $(400cm^2)$ | 30 cm square $(900cm^2)$ | |
| 2-40 | **0.17** | × | 1.5 | x | x | × | × | × | Comparative Example |
| 2-41 | 0.15 | ○ | 13.4 | x | ○ | ○ | ○ | × | Example |
| 2-42 | 0.14 | ○ | 18 .3 | x | ○ | ○ | ○ | × | Example |
| 2-43 | 0.13 | ○ | 28.3 | x | ○ | ○ | ○ | × | Example |
| 2-44 | 0.13 | ○ | 27 .4 | x | ○ | ○ | ○ | × | Example |
| 2-45 | 0.14 | ○ | 28.6 | x | ○ | ○ | ○ | × | Example |
| 2-46 | **0.32** | × | 0.1 | x | × | x | × | × | Comparative Example |
| 2-47 | **0.27** | × | 0.1 | × | × | ○ | ○ | × | Comparative Example |
| 2-48 | **0.24** | × | 0.1 | × | × | ○ | ○ | × | Comparative Example |
| 2-49 | **0.18** | × | 2.5 | × | × | ○ | ○ | × | Comparative Example |
| 2-50 | **0.17** | × | 17.4 | × | × | ○ | o | × | Comparative Example |
| 2-51 | 0.14 | ○ | 22.3 | × | × | ○ | ○ | × | Example |
| 2-52 | **0.19** | × | 0.6 | × | × | o | o | × | Comparative Example |
| 2-53 | **0.21** | × | 57.4 | o | ○ | × | × | × | Comparative Example |

EP 3 922 602 B1

From the results shown in Tables 2 and 3, it can be seen that all of the Examples exhibited a density of aerogel of 0.15 g/cm$^3$ or less and the fabricable size (area) of aerogels was 20 cm square (400 cm$^2$) or more.

**Claims**

1. A method for producing an aerogel, comprising:

   a sol formation step of forming a sol by adding a silicon compound to an aqueous solution containing an acid catalyst and hydrolyzing the silicon compound,
   wherein the silicon compound contains at least a tetra-functional silane compound and a tri-functional silane compound, among a tetra-functional silane compound, a tri-functional silane compound, and a di-functional silane compound,
   the aerogel has a density of 0.15 g/cm$^3$ or less, and
   the aerogel is formed as a single plate or a single film.

2. The method for producing an aerogel according to claim 1,
   wherein when Qx, Tx, and Dx respectively represent mass percentages of the tetra-functional silane compound, the tri-functional silane compound, and the di-functional silane compound, the silicon compound is mixed so that Qx, Tx, and Dx satisfy $0 < Qx < 50$, $50 \leq Tx < 100$, $0 \leq Dx < 30$ and $Qx + Tx + Dx = 100$.

3. The method for producing an aerogel according to claim 2,
   wherein when the respective mass percentages Qx, Tx, and Dx which are mass percentages of the tetra-functional silane compound, the tri-functional silane compound, and the di-functional silane compound, respectively are plotted in a triangular diagram (Qx, Tx, and Dx) having Qx, Tx, and Dx as coordinate axes, Qx, Tx, and Dx are present within a range surrounded by six straight lines each connecting point A (5, 95, 0), point B (40, 60, 0), point C (40, 55, 5), point D (30, 55, 15), point E (15, 70, 15), point F (5, 90, 5), and point A (5, 95, 0) in this order.

4. An aerogel,

   wherein when mass percentages derived from a tetra-functional silane Q component, a tri-functional silane T component, and a di-functional silane D component are represented by Q, T, and D, respectively, with the mass percentages being calculated from signal area integral values measured by solid-state $^{29}$Si-NMR,
   Q, T, and D satisfy $0 < Q < 50$, $50 \leq T < 100$, $0 \leq D < 30$, respectively, and $Q + T + D = 100$,
   wherein the aerogel has a density of 0.15 g/cm$^3$ or less, and
   the aerogel is formed as a single plate or a single film.

5. The aerogel according to claim 4,

   wherein when the respective mass percentages Q, T, and D calculated from signal area integral values derived from the Q component, the T component, and the D component are plotted in a triangular diagram (Q, T, D) having Q, T, and D as coordinate axes,
   Q, T, and D are present within a range surrounded by six straight lines each connecting point A' (5, 95, 0), point B' (40, 60, 0), point C' (40, 55, 5), point D' (30, 55, 15), point E' (15, 70, 15), point F' (5, 90, 5), and point A' (5, 95, 0) in this order.

6. The aerogel according to claim 4 or 5, wherein a minimum value of transmittance in a wavelength range of 400 to 800 nm is 40% or more.

7. The aerogel according to any one of claims 4 to 6, wherein the aerogel has an area of 400 cm$^2$ or more.

**Patentansprüche**

1. Verfahren zur Herstellung eines Aerogels, umfassend:

   einen Solbildungsschritt zur Bildung eines Sols durch Zugabe einer Siliciumverbindung zu einer wässrigen Lösung, die einen sauren Katalysator enthält, und Hydrolyse der Siliciumverbindung,

wobei die Siliciumverbindung mindestens eine tetrafunktionelle Silanverbindung und eine trifunktionelle Silanverbindung enthält, unter einer tetrafunktionellen Silanverbindung, einer trifunktionellen Silanverbindung und einer difunktionellen Silanverbindung,

das Aerogel eine Dichte von 0,15 g/cm$^3$ oder weniger hat, und

das Aerogel als einzelne Platte oder als einzelner Film gebildet wird.

2. Verfahren zur Herstellung eines Aerogels nach Anspruch 1,
wobei, wenn Qx, Tx und Dx jeweils Massenprozentsätze der tetrafunktionellen Silanverbindung, der trifunktionellen Silanverbindung und der di-funktionellen Silanverbindung darstellen, die Siliciumverbindung so gemischt wird, dass Qx, Tx und Dx die Bedingungen $0 < Qx < 50$, $50 \leq Tx < 100$, $0 \leq Dx < 30$ und $Qx + Tx + Dx = 100$ erfüllen.

3. Verfahren zur Herstellung eines Aerogels nach Anspruch 2,
wobei, wenn die jeweiligen Massenprozentsätze Qx, Tx und Dx die Massenprozentsätze der tetrafunktionellen Silanverbindung, der trifunktionellen Silanverbindung bzw. der difunktionellen Silanverbindung sind, und diese in einem Dreiecksdiagramm (Qx, Tx und Dx) aufgetragen werden, das Qx, Tx, und Dx als Koordinatenachsen aufweist, wobei Qx, Tx und Dx in einem Bereich liegen, der von sechs Geraden umgeben ist, die jeweils den Punkt A (5, 95, 0), den Punkt B (40, 60, 0), den Punkt C (40, 55, 5), den Punkt D (30, 55, 15), den Punkt E (15, 70, 15), den Punkt F (5, 90, 5) und den Punkt A (5, 95, 0) in dieser Reihenfolge verbinden.

4. Ein Aerogel,

wobei die Massenprozentsätze, die von einer tetrafunktionellen Silan-Q-Komponente, einer trifunktionellen Silan-T-Komponente und einer di-funktionellen Silan-D-Komponente abgeleitet sind, durch Q, T bzw. D dargestellt werden, wobei die Massenprozentsätze aus Signalflächenintegralwerten berechnet werden, die durch Festkörper $^{29}$Si-NMR gemessen werden,
Q, T und D erfüllen jeweils die Bedingungen $0 < Q < 50$, $50 \leq T < 100$, $0 \leq D < 30$ und $Q + T + D = 100$,
wobei das Aerogel eine Dichte von 0,15 g/cm$^3$ oder weniger aufweist, und

sas Aerogel als einzelne Platte oder als einzelner Film gebildet wird.

5. Das Aerogel nach Anspruch 4,

wobei die jeweiligen Massenanteile Q, T und D, die aus Signalflächenintegralwerten berechnet werden, die aus der Q-Komponente, der T-Komponente und der D-Komponente abgeleitet sind, in einem Dreiecksdiagramm (Q, T, D) mit Q, T und D als Koordinatenachsen aufgetragen werden,
wobei sich Q, T und D innerhalb eines Bereichs befinden, der von sechs Geraden umgeben ist, die jeweils den Punkt A' (5, 95, 0), den Punkt B' (40, 60, 0), den Punkt C' (40, 55, 5), den Punkt D' (30, 55, 15), den Punkt E' (15, 70, 15), den Punkt F' (5, 90, 5) und den Punkt A' (5, 95, 0) in dieser Reihenfolge verbinden.

6. Aerogel nach Anspruch 4 oder 5, wobei der Mindestwert der Durchlässigkeit in einem Wellenlängenbereich von 400 bis 800 nm 40 % oder mehr beträgt.

7. Aerogel nach einem der Ansprüche 4 bis 6, wobei das Aerogel eine Fläche von 400 cm$^2$ oder mehr aufweist.

**Revendications**

1. Un procédé de fabrication d'un aérogel, comprenant :

une étape de formation de sol consistant à former un sol en ajoutant un composé de silicium à une solution aqueuse contenant un catalyseur acide et en hydrolysant le composé de silicium,
le composé de silicium contenant au moins un composé silane tétrafonctionnel et un composé silane trifonctionnel, parmi un composé silane tétrafonctionnel, un composé silane trifonctionnel et un composé silane difonctionnel,
l'aérogel ayant une masse volumique de 0,15 g/cm$^3$ ou moins, et
l'aérogel étant réalisé sous la forme d'une plaque unique ou d'un film unique.

2. Le procédé de fabrication d'un aérogel selon la revendication 1,

dans lequel, lorsque Qx, Tx et Dx représentent respectivement des pourcentages en masse du composé silane tétrafonctionnel, du composé silane trifonctionnel et du composé silane difonctionnel, le composé de silicium est mélangé de sorte que Qx, Tx et Dx satisfont $0 < Qx < 50$, $50 \leq Tx < 100$, $0 \leq Dx < 30$ et $Qx + Tx + Dx = 100$.

3. Le procédé de fabrication d'un aérogel selon la revendication 2,
dans lequel, lorsque les pourcentages en masse respectifs Qx, Tx et Dx qui sont des pourcentages en masse du composé silane tétrafonctionnel, du composé silane trifonctionnel et du composé silane difonctionnel, respectivement, sont tracés dans un diagramme triangulaire (Qx, Tx, et Dx) ayant Qx, Tx et Dx comme axes de coordonnées, Qx, Tx et Dx sont présents dans une gamme entourée de six lignes droites reliant chacune le point A (5, 95, 0), le point B (40, 60, 0), le point C (40, 55, 5), le point D (30, 55, 15), le point E (15, 70, 15), le point F (5, 90, 5) et le point A (5, 95, 0) dans cet ordre.

4. Un aérogel,

dans lequel lorsque les pourcentages en masse dérivés d'un composant silane Q tétrafonctionnel, d'un composant silane T trifonctionnel et d'un composant silane D difonctionnel sont représentés par Q, T et D, respectivement, les pourcentages en masse étant calculés à partir de valeurs intégrales de zones de signal mesurées par RMN $^{29}$Si à l'état solide,
Q, T et D satisfont $0 < Q < 50$, $50 \leq T < 100$, $0 \leq D < 30$, respectivement, et $Q + T + D = 100$,
l'aérogel ayant une masse volumique de 0,15 g/cm$^3$ ou moins, et
l'aérogel étant réalisé sous la forme d'une plaque unique ou d'un film unique.

5. L'aérogel selon la revendication 4,

dans lequel lorsque les pourcentages de masse respectifs Q, T et D calculés à partir des valeurs intégrales de la zone de signal dérivées de la composante Q, la composante T et la composante D sont tracées dans un diagramme triangulaire (Q, T, D) ayant Q, T, et D comme axes de coordonnées,
Q, T et D sont présents dans une gamme entourée de six lignes droites reliant chacune le point A' (5, 95, 0), le point B' (40, 60, 0), le point C' (40, 55, 5), le point D' (30, 55, 15), le point E' (15, 70, 15), le point F' (5, 90, 5) et le point A' (5, 95, 0) dans cet ordre.

6. L'aérogel selon la revendication 4 ou la revendication 5, dans lequel une valeur minimale de transmittance dans une gamme de longueurs d'onde de 400 à 800 nm est de 40 % ou plus.

7. L'aérogel selon l'une quelconque des revendications 4 à 6, dans lequel l'aérogel a une surface de 400 cm$^2$ ou plus.

# FIG. 1

# FIG. 2

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5250900 B
- JP 2011136859 A